# EUROPÄISCHE PATENTANMELDUNG

(11) **EP 1 748 229 A2**
(43) Veröffentlichungstag der Anmeldung: **31.01.2007**
(21) Anmeldenummer: 06014787.3
(22) Anmeldetag: 15.07.2006
(51) Int. Cl.: F16H 57/12

(54) **Getriebeelement für ein spielfreies Getriebe, insbesondere für die Feinwerktechnik**

(30) Priorität: 26.07.2005 DE 102005036127
(71) Anmelder: Dr. Fritz Faulhaber GmbH & Co. KG, 71101 Schönaich (DE)
(72) Erfinder: Bessey, Reiner, 71101 Schönaich (DE)
(74) Vertreter: Jackisch-Kohl, Anna-Katharina

(57) **Zusammenfassung**

In der Feinwerktechnik werden zur Übertragung von Leistung und zur Positionsregelung Stirnradgetriebe eingesetzt, deren Getriebespiel minimiert ist. Hierzu werden zwei parallele, in sich abgeschlossene Getriebepfade gegeneinander verspannt. Bauteiltoleranzen und die Rasterung durch die Zähne lassen jedoch keine prozeßsichere Verspannung der Getriebe zu. Damit das Getriebeelement (1) bei einfacher konstruktiver Ausbildung eine kompakte Ausbildung hat, ist die Elastizität eines der beiden Getriebepfade erhöht. Dadurch ist eine prozeßsichere Verspannung der beiden Getriebepfade gewährleistet. Das Getriebeelement (1) wird in der Feinwerktechnik eingesetzt.

## Beschreibung

Die Erfindung betrifft ein Getriebeelement für ein spielfreies Getriebe, insbesondere für die Feinwerktechnik, nach dem Oberbegriff des Anspruches 1.

In der Feinwerktechnik sind zur Übertragung von Leistung und zur Positionsregelung Stirnradgetriebe bekannt, bei denen durch verschiedene technische Maßnahmen das Getriebespiel minimiert ist. Eine Möglichkeit besteht darin, zwei parallele, in sich abgeschlossene Getriebepfade gegeneinander zu verspannen. Die Bewegungen und Drehmomente werden je nach Drehrichtung über den einen oder über den anderen Getriebepfad geleitet. Die Verspannung ist aufgrund der Elastizität der Getriebepfade möglich. Bauteiltoleranzen und die Rasterung durch die Zähne lassen jedoch keine prozeßsichere Verspannung der Getriebe zu.

Bei einem bekannten spielfreien Getriebe (DE 100 36 937 A1) sind ein starrer Stufenplanet und ein drehelastischer und vorgespannter Stufenplanet vorgesehen. Eine solche Getriebeausbildung ist konstruktiv aufwendig ausgebildet und führt zu einem verhältnismäßig groß bauenden Getriebe.

Bei einem anderen spielfreien Getriebe (DE 25 38 460 C3) ist eine Spannvorrichtung vorgesehen, mit der ein Zahnrad mit einer Abtriebswelle eines Stellmotors verbunden ist. Die Spannvorrichtung hat eine Nockenscheibe und eine Mitnehmerscheibe, in der in Winkelabständen Langlöcher vorgesehen sind, in die axial sich erstreckende Bolzen der Nockenscheibe eingreifen. Innerhalb der Langlöcher greifen an diesen Bolzen Druckfedern an, wodurch eine Verspannung des Getriebes erreicht wird. Auch dieses Getriebe ist konstruktiv aufwendig ausgebildet und besteht aus einer Vielzahl von Bauteilen.

Der Erfindung liegt die Aufgabe zugrunde, das gattungsgemäße Getriebeelement so auszubilden, daß es bei einfacher konstruktiver Ausbildung eine kompakte Ausbildung hat.

Diese Aufgabe wird beim gattungsgemäßen Getriebeelement erfindungsgemäß mit den kennzeichnenden Merkmalen des Anspruches 1 gelöst.

Mit dem erfindungsgemäßen Getriebeelement wird die Elastizität eines der beiden Getriebepfade des Getriebes erhöht, wodurch eine prozeßsichere Verspannung der beiden Getriebepfade gewährleistet ist.

Vorteilhaft wird zur Erhöhung dieser Elastizität wenigstens ein Drehfederelement eingesetzt, mit dem zwei Getriebeteile gegeneinander vorgespannt werden. Das Drehfederelement läßt sich raumsparend innerhalb des Getriebeelementes unterbringen und gewährleistet dennoch eine zuverlässige Verspannung der beiden Getriebepfade gegeneinander.

Weitere Merkmale der Erfindung ergeben sich aus den weiteren Ansprüchen, der Beschreibung und der Zeichnung.

Die Erfindung wird anhand eines in der Zeichnung dargestellten Ausführungsbeispieles näher erläutert. Es zeigen
- Fig. 1: im Axialschnitt ein erfindungsgemäßes Getriebeelement,
- Fig. 2: ein Drehfederelement des erfindungsgemäßen Getriebeelementes in zwei verschiedenen Ansichten,
- Fig. 3: in Ansicht und in schematischer Darstellung einen Teil eines Getriebes, in das das erfindungsgemäße Getriebeelement eingebaut ist.

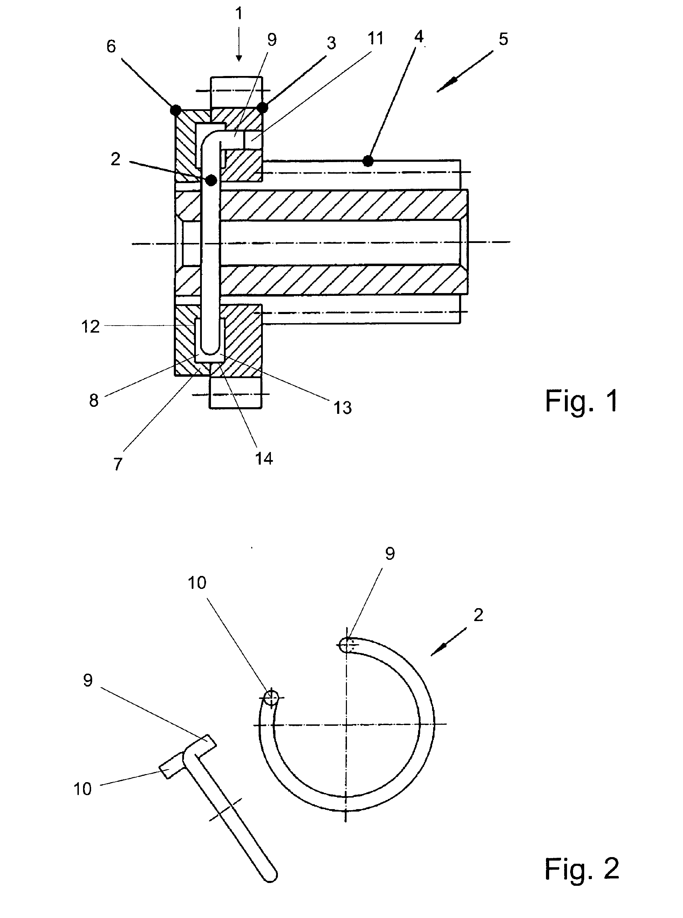

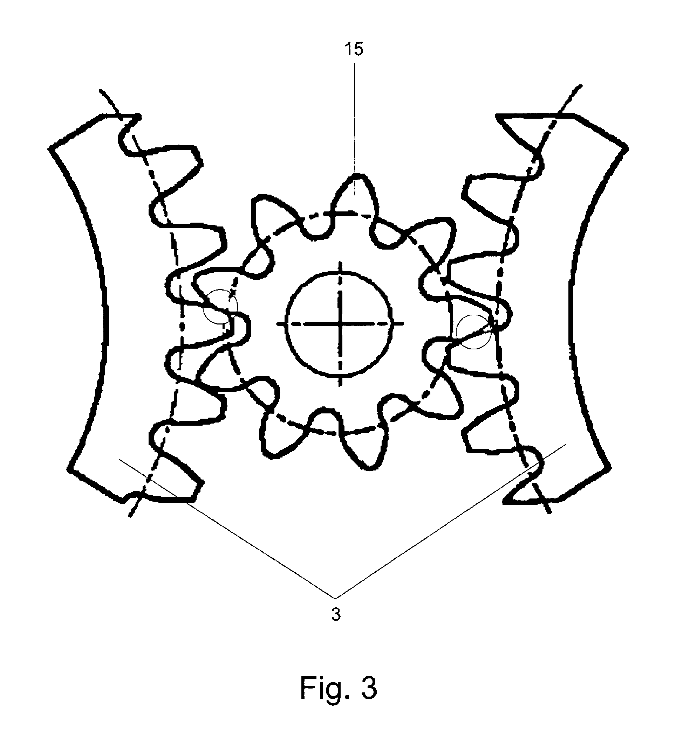

Die Fig. 1 und 2 zeigen ein Getriebeelement 1, das in ein Getriebe eingebaut wird, wie es beispielhaft in Fig. 3 dargestellt ist. Dieses Getriebe ist ein Stirnradgetriebe mit zwei Getriebepfaden. Von diesem Getriebe sind zwei Stirnräder 3 dargestellt, zwischen denen sich ein Ritzel 15 einer Antriebswelle eines Motors befindet. Er ist an das Getriebe angeschlossen, das durch ihn angetrieben wird. Das Ritzel 15 ist in Eingriff mit den Stirnrädern 3.

Das Getriebe ist spielfrei, zumindest spielarm ausgebildet und wird vorteilhaft in der Feinwerktechnik eingesetzt. Das Getriebeelement 1 hat ein Ritzel 4, auf dem konzentrisch das Stirnrad 3 sitzt. Das Ritzel 4 und das Stirnrad 3 sind radial spielfrei zueinander angeordnet. Das Getriebeelement 1 wird am antriebsseitigen Ende des Getriebes in einem der Getriebepfade eingebaut und sorgt für die Spielfreiheit, zumindest aber für die Spielarmut des Getriebes. Das Getriebeelement 1 bildet innerhalb des Stirnradgetriebes ein Zwischengetriebe 5.

Auf dem einen Ende des Ritzels 4 sitzt drehfest eine Scheibe 6, die koaxial zum Ritzel 4 angeordnet ist. Die Scheibe 6 kann kraft-, stoff- oder formschlüssig drehfest mit dem Ritzel 4 verbunden sein. Die Scheibe 6 hat einen umlaufenden, gegen das Stirnrad 3 gerichteten Rand 7, der einen Aufnahmeraum 8 radial nach außen begrenzt. In ihm ist ein Drehfederelement 2 untergebracht, mit dem ein Drehmoment von der Scheibe 6 und dem Ritzel 4 auf das Stirnrad 3 übertragen wird. Das Drehfederelement 2 ist als Teilring ausgebildet (Fig. 2), der sich über mehr als 270° erstreckt und dessen beide Ende 9, 10 entgegengesetzt zueinander rechtwinklig abgewinkelt sind. Mit diesen Enden 9, 10 greift das Drehfederelement 2 in axiale Vertiefungen bzw. Bohrungen des Stirnrades 3 und der Scheibe 6 ein. In Fig. 1 ist die axiale Bohrung 10 des Stirnrades 3 erkennbar, in das das Ende 9 des Drehfederelementes 2 formschlüssig eingreift. Die Scheibe 6 ist mit einer entsprechenden Bohrung versehen, in die das andere Ende 10 eingreift. In eingebautem Zustand ist der Boden der Scheibe 6 dem Antriebsmotor zugewandt.

Das Drehfederelement 2 liegt im Aufnahmeraum 8 der Scheibe 6 und hat geringen Abstand vom radialen Boden 12 des Aufnahmeraumes 8. Das Stirnrad 3 ist an seiner der Scheibe 6 zugewandten Stirnseite mit einer zentrischen Vertiefung 13 versehen, die gleichen Durchmesser wie der Aufnahmeraum 8 der Scheibe 6 hat. Die Scheibe 6 liegt mit ihrem abgewinkelten umlaufenden Rand 7 stirnseitig am umlaufenden, die Vertiefung 13 radialen begrenzenden Rand 14 des Stirnrades 3 an. Dadurch liegt das Drehfederelement 2 geschützt zwischen der Scheibe 6 und dem Stirnrad 3.

Der Innendurchmesser des Drehfederelementes 2 ist geringfügig größer als der Außendurchmesser des Ritzels 4 im Bereich des Drehfederelementes 2. Dadurch ist gewährleistet, daß sich das Drehfederelement 2 geringfügig elastisch zusammenziehen kann, ohne an der Außenseite des Ritzels 4 zur Anlage zu kommen.

In der Einbaulage ist das Drehfederelement 2 in Umfangsrichtung elastisch vorgespannt, wodurch das Stirnrad 3 und über die Scheibe 6 das Ritzel 4 gegeneinander verspannt sind. Zwischen dem Stirnrad 3 und dem Ritzel 4 herrscht somit Spielfreiheit. Durch das Drehfederelement 2 sind das Stirnrad 3 und das Ritzel 4 begrenzt federnd relativ zueinander verdrehbar.

Das Drehfederelement 2 hat vorteilhaft runden Querschnitt. Es kann aus Stahl, aus einem Nichteisenmaterial oder aus Kunststoff hergestellt sein. Das Drehfederelement 2 nimmt axial und radial nur wenig Raum in Anspruch, so daß das Getriebeelement 1 und damit der Zwischentrieb 5 sehr kompakt ausgebildet ist. Das spielfreie Getriebeelement 1 ist als feinwerktechnisches Bauelement ausgebildet, in das das Verspannelement in Form des Drehfederelementes 2 direkt integriert ist. Wird das Getriebeelement 1 in das Stirnradgetriebe eingebaut, ergibt sich eine optimale Leistungsdichte und nur eine geringe Anzahl an Bauelementen für das spielfreie Stirnradgetriebe. Mit dem spielfreien Getriebeelement 1 können zwei parallele Getriebepfade in einem Gehäuse realisiert werden, wobei diese Pfade gegeneinander verspannt sind.

Das Drehfederelement 2 muß nicht ein gesondertes Bauteil sein, sondern kann durch eine bewußt drehelastische Gestaltung des Zwischentriebes 5 gebildet werden. So ist es beispielsweise möglich, das Stirnrad 3 selbst mit Drehfedereigenschaften auszubilden.

Der Zwischentrieb 5 hat eine größere Elastizität als ein herkömmlicher Zwischentrieb. Die Elastizität des gesamten Getriebepfades, in den der Zwischentrieb 5 eingebaut ist, weist somit ebenfalls eine größere Elastizität auf als herkömmliche Getriebepfade. Der Zwischentrieb 5 wird vorteilhaft an einer Stelle eingebaut, an der ein relativ geringes Drehmoment wirkt. In der Regel wird dies der motorseitige Eingang des spielfreien Getriebes sein. Das dort zu übertragende Drehmoment ist vorteilhaft geringer als das Drehmoment, mit dem das Getriebeelement 1 durch das Drehfederelement 2 vorgespannt ist.

## Patentansprüche

1. Getriebeelement für ein spielfreies Getriebe mit mindestens zwei Getriebepfaden, insbesondere für die Feinwerktechnik, die gegeneinander verspannt sind,
**dadurch gekennzeichnet, daß** die Elastizität eines der beiden Getriebepfade erhöht ist.

2. Getriebeelement, insbesondere nach Anspruch 1,
**dadurch gekennzeichnet, daß** das Getriebeelement (1) aus zwei Getriebeteilen (3, 4) besteht, die gegeneinander elastisch verspannbar sind.

3. Getriebeelement nach Anspruch 1 oder 2,
**dadurch gekennzeichnet, daß** zur Erhöhung der Elastizität mindestens ein Drehfederelement (2) vorgesehen ist.

4. Getriebeelement nach Anspruch 3,
**dadurch gekennzeichnet, daß** das Drehfederelement (2) ein Drehmoment zwischen den beiden relativ zueinander drehbaren Getriebeteilen (3; 4, 6) überträgt.

5. Getriebeelement nach einem der Ansprüche 2 bis 4,
**dadurch gekennzeichnet, daß** das eine Getriebeteil (3) ein Zahnrad ist, das auf dem anderen Getriebeteil (4) gelagert ist.

6. Getriebeelement nach einem der Ansprüche 2 bis 5,
**dadurch gekennzeichnet, daß** das andere Getriebeteil (4) ein Ritzel ist.

7. Getriebeelement nach einem der Ansprüche 1 bis 6,
**dadurch gekennzeichnet, daß** das Getriebeelement (1) ein Zwischengetriebe (5) des Getriebes ist.

8. Getriebeelement nach einem der Ansprüche 2 bis 7,
**dadurch gekennzeichnet, daß** das Zahnrad (3) und das Ritzel (4) koaxial zueinander liegen.

9. Getriebeelement nach einem der Ansprüche 2 bis 8,
**dadurch gekennzeichnet, daß** das Zahnrad (3) und das Ritzel (4) radial spielfrei zueinander sind.

10. Getriebeelement nach einem der Ansprüche 2 bis 9,
**dadurch gekennzeichnet, daß** das Drehfederelement (2) eine Scheibe (6) und das eine Getriebeteil (3) miteinander verbindet.

11. Getriebeelement nach Anspruch 10,
**dadurch gekennzeichnet, daß** die Scheibe (6) drehfest auf dem anderen Getriebeteil (4) sitzt.

12. Getriebeelement nach Anspruch 10 oder 11,
**dadurch gekennzeichnet, daß** die Scheibe (6) koaxial zum anderen Getriebeteil (4) liegt.

13. Getriebeelement nach einem der Ansprüche 10 bis 12,
**dadurch gekennzeichnet, daß** die Scheibe (6) kraftschlüssig mit dem anderen Getriebeteil (4) verbunden ist.

14. Getriebeelement nach einem der Ansprüche 10 bis 12,
**dadurch gekennzeichnet, daß** die Scheibe (6) stoffschlüssig mit dem anderen Getriebeteil (4) verbunden ist.

15. Getriebeelement nach einem der Ansprüche 10 bis 12,
**dadurch gekennzeichnet, daß** die Scheibe (6) formschlüssig mit dem anderen Getriebeteil (4) verbunden ist.

16. Getriebeelement nach einem der Ansprüche 3 bis 15,
**dadurch gekennzeichnet, daß** das Drehfederelement (2) zwischen der Scheibe (6) und dem einen Getriebeteil (3) liegt.

17. Getriebeelement nach einem der Ansprüche 10 bis 16,
**dadurch gekennzeichnet, daß** die Scheibe (6) eine stirnseitige Vertiefung (8) aufweist, in die das Drehfederelement (2) eingreift.

18. Getriebeelement nach einem der Ansprüche 2 bis 17,
**dadurch gekennzeichnet, daß** das eine Getriebeteil (3) eine stirnseitige Vertiefung (13) aufweist, in die das Drehfederelement (2) eingreift.

19. Getriebeelement nach Anspruch 17 oder 18,
**dadurch gekennzeichnet, daß** die Vertiefung (8, 13) der Scheibe (6) und des einen Getriebeteiles (3) eine geschlossene Kammer für das Drehfederelement (2) bilden.

20. Getriebeelement nach einem der Ansprüche 3 bis 19,
**dadurch gekennzeichnet, daß** das Drehfederelement (2) ein Teilring mit gegensinnig abgewinkelten Enden (9, 10) ist.

21. Getriebeelement nach Anspruch 20,
**dadurch gekennzeichnet, daß** die Enden (9, 10) des Drehfederelementes (2) in Öffnungen (11) des einen Getriebeteiles (3) und der Scheibe (6) eingreifen.

22. Getriebeelement nach einem der Ansprüche 3 bis 21,
**dadurch gekennzeichnet, daß** der Innendurchmesser des Drehfederelementes (2) größer ist als der Außendurchmesser des anderen Getriebeteiles (4) im Bereich des Drehfederelementes (2).

23. Getriebeelement nach einem der Ansprüche 3 bis 22,
**dadurch gekennzeichnet, daß** das Drehfederelement (2) aus Stahl besteht.

24. Getriebeelement nach einem der Ansprüche 3 bis 22,
**dadurch gekennzeichnet, daß** das Drehfederelement (2) aus Nichteisenmaterial, insbesondere aus Kunststoff, besteht.

25. Getriebeelement nach einem der Ansprüche 3 bis 24,
**dadurch gekennzeichnet, daß** das Getriebeelement (1) mit Drehfederelement (2) in einem gemeinsamen Gehäuse untergebracht ist.

26. Getriebeelement nach Anspruch 1 oder 2,
**dadurch gekennzeichnet, daß** das eine Getriebeteil (3) als Drehfederelement ausgebildet ist.
